# EUROPÄISCHE PATENTSCHRIFT

(11) **EP 1 304 026 B1**
(45) Veröffentlichungstag und Bekanntmachung des Hinweises auf die Patenterteilung: **07.09.2005**
(21) Anmeldenummer: 01124097.5
(22) Anmeldetag: 10.10.2001
(51) Int. Cl.: A01D 34/82

(54) **Gehäuse für ein Motorarbeitsgerät**
Housing for a motorized working tool
Boîtier pour un outil de travail motorisé

(43) Veröffentlichungstag der Anmeldung: 23.04.2003
(73) Patentinhaber: Viking GmbH, 6330 Langkampfen (AT)
(72) Erfinder: Knoll, Martin, 6342 Niederndorf (AT)
(74) Vertreter: Wasmuth, Rolf

(56) Entgegenhaltungen:
- DE-A- 19 844 439
- US-A- 4 711 077
- US-A- 5 787 693
- US-A- 5 894 715

## Beschreibung

Die Erfindung betrifft ein Gehäuse für ein Motorarbeitsgerät, insbesondere für einen Motorrasenmäher.

Ein solches Gehäuse das dem Oberbegrift von Anspruch 1 entspricht, ist aus US-A-4 711 077 bekannt.

Gehäuse für Motorrasenmäher sind entweder für die Montage eines Elektromotors oder für die Montage eines Verbrennungsmotors konzipiert. Bei Gehäusen, die sowohl für die Montage eines Elektromotors als auch für die Montage eines Verbrennungsmotors verwendet werden können, werden Adapter benötigt, um das Gehäuse dem Motor anzupassen.

In der DE 34 40 510 wird ein Elektrorasenmäher offenbart, dessen mit einer Haube versehenes Gehäuse eine Vertiefung aufweist, in der ein Elektromotor angeordnet ist.

Aufgabe der Erfindung ist es, das Gehäuse eines Motorarbeitsgerätes, insbesondere eines Motorrasenmähers, so zu gestalten, daß auf dem Gehäuse wahlweise ein Elektromotor oder ein Verbrennungsmotor befestigt werden kann, ohne daß zusätzliche Bauteile wie beispielsweise Adapter benötigt werden.

Diese Aufgabe wird durch ein Gehäuse mit den Merkmalen des Anspruchs 1 gelöst.

Eine Ausgestaltung der Erfindung sieht vor, daß die erste Befestigungsfläche eine mittige, insbesondere kreisförmige Aussparung aufweist, durch die zweckmäßigerweise die zur Übertragung des vom Motor erzeugten Drehmoments auf unter dem Gehäuse angeordnete Schneidwerkzeuge dienende Abtriebswelle eines Motors ragt.

Vorteilhaft sind in einer Befestigungsfläche Befestigungsöffnungen vorgesehen, die um die Abtriebswelle angeordnet sind und insbesondere zur Abtriebswelle den gleichen Abstand haben. Zweckmäßig wird die Lage des Motors durch die Lage der Befestigungsöffnungen bestimmt. Die Befestigung des Motors auf dem Gehäuse wird besonders vorteilhaft mittels Schrauben erreicht, die von der Unterseite des Gehäuses durch die Öffnungen gesteckt werden, und mittels derer der Motor auf dem Gehäuse verschraubt wird.

Um eine gute, definierte Auflage des Motors auf dem Gehäuse zu erreichen, weisen die Befestigungsöffnungen einen vorstehenden Bund auf, der auf der dem Motor zugewandten Seite des Gehäuses liegt. Durch den vorstehenden Bund wird außerdem die Stabilität des Randes der Befestigungsöffnungen erhöht.

Für die erste Befestigungsfläche ist vorgesehen, daß die Befestigungsöffnungen symmetrisch zur Mitte der Aussparung liegen und vorteilhaft vier in Umfangsrichtung mit gleichen Abständen liegende Befestigungsöffnungen angeordnet sind. Vorteilhaft sind auf der zweiten Befestigungsfläche drei Befestigungsöffnungen angeordnet, die die Drehlage des Verbrennungsmotors festlegen.

Weitere Merkmale ergeben sich aus der Beschreibung und der Zeichnung, in der Ausführungsbeispiele der Erfindung dargestellt sind. Es zeigen:
- Fig. 1: eine perspektivische Ansicht eines Gehäuses,
- Fig. 2: einen Längsschnitt durch ein Gehäuse mit Elektromotor,
- Fig. 3: eine Ansicht von unten auf das Gehäuse aus Fig. 2,
- Fig. 4: eine Ansicht von unten auf ein Gehäuse mit Verbrennungsmotor,
- Fig. 5: einen Längsschnitt durch das Gehäuse aus Fig. 4,
- Fig. 6: einen Schnitt entlang der Linie B-B in Fig. 5.

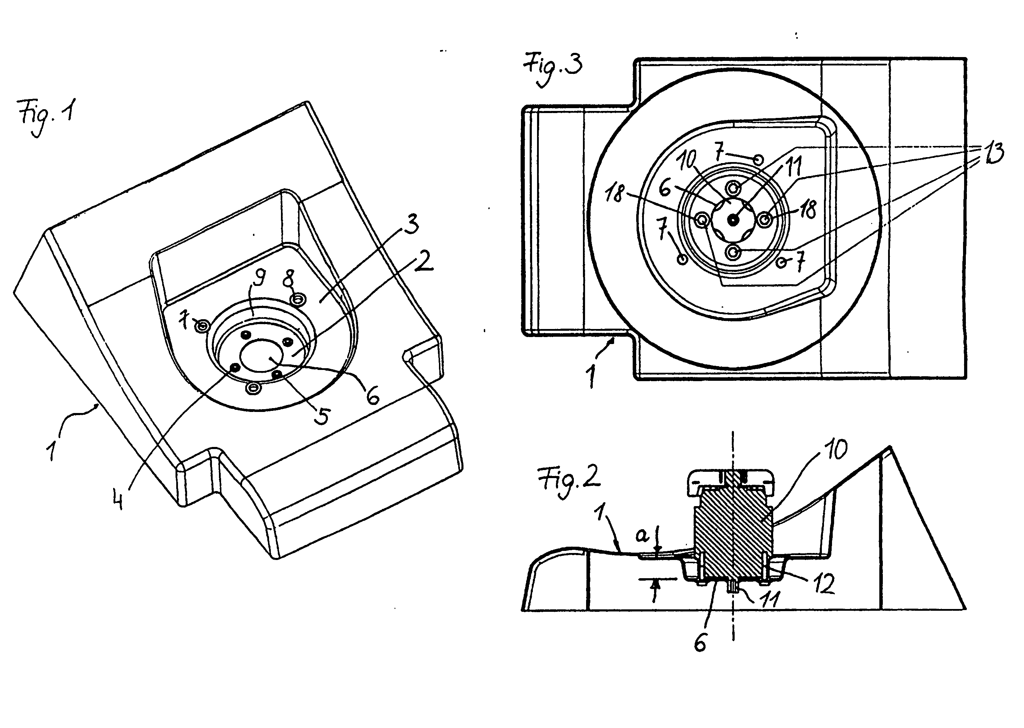

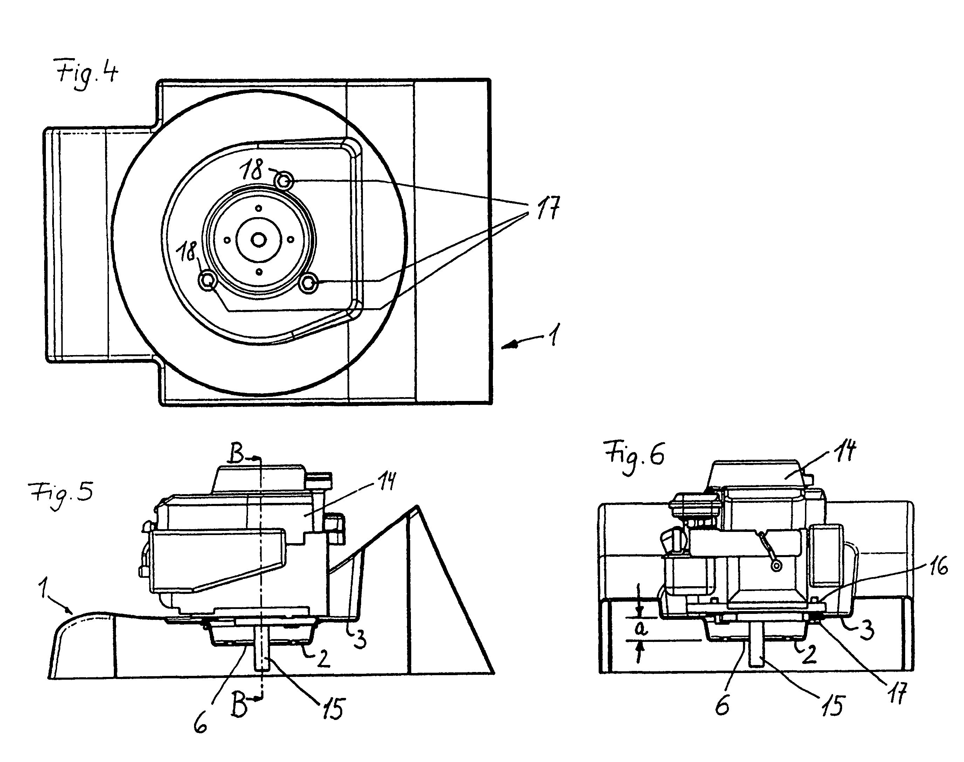

Fig. 1 zeigt ein Gehäuse 1 für einen Rasenmäher mit einem Gehäusetopf 9, der eine erste Befestigungsfläche 2 und eine zweite Befestigungsfläche 3 besitzt. Wie aus Fig. 2 ersichtlich, dient die erste Befestigungsfläche 2 zur Aufnahme des Elektromotors 10. Die erste Befestigungsfläche 2 besitzt Befestigungsöffnungen 4, die mit einem vorstehenden Bund 5 versehen sind, der auf der Innenseite des Gehäusetopfes liegt. Der Elektromotor 10 ist auf der ersten Befestigungsfläche 2 so plaziert, daß seine Abtriebswelle 11 durch die mittige kreisförmige Aussparung 6 des Gehäuses 1 ragt, und daß oberhalb jeder Befestigungsöffnung 4 eine mit Gewinde versehene vertikale Bohrung 12 des Elektromotors 10 angeordnet ist. Jede Befestigungsöffnung 4 besitzt einen vorstehenden Bund 5, der auf der dem Elektromotor 10 zugewandten Seite des Gehäuses 1 liegt. Der Elektromotor 10 ist wie in Fig. 3 dargestellt mittels von unten durch das Gehäuse 1 geschobener Schrauben 13 am Gehäuse fixiert. Hierbei liegt der Elektromotor auf dem Bund 5 der Befestigungsöffnungen 4 auf, wodurch sich eine definierte Auflagefläche ergibt. In einer Ausführungsvariante kann der Motor auch mittels anderer Befestigungsmittel auf dem Gehäuse fixiert werden. Beispielsweise kann das Gehäuse mindestens einen Vorsprung aufweisen, unter den der Motor mit einem an seiner Unterseite seitlich angebrachten Rand geschoben wird. Der Motor kann dann mittels mindestens einer Schraube auf der Gegenseite fixiert werden. Alternativ sind Klemmechanismen möglich, mittels derer der Motor auf dem Gehäuse 1 fixiert wird, und die die Verwendung von Schrauben überflüssig machen.

Wie in Fig. 5 und Fig. 6 gezeigt, ist mit Abstand a zur ersten Befestigungsfläche 2 in Richtung der Abtriebswelle 11 auf der der Unterseite des Gehäuses 1 abgewandten Seite der ersten Befestigungsfläche 2 eine zweite Befestigungsfläche 3 angeordnet. Die zweite Befestigungsfläche 3 ist so angeordnet, daß die Kontur der ersten Befestigungsfläche 2 - in Richtung der Abtriebswelle 11 gesehen - innerhalb der Außenkontur der zweiten Befestigungsfläche 3 liegt (Fig. 4). Die zweite Befestigungsfläche 3 dient zur Aufnahme eines Verbrennungsmotors 14. Die zweite Befestigungsfläche 3 besitzt drei Befestigungsöffnungen 7 mit vorstehendem Bund 8, wobei der Bund 8 auf der dem Verbrennungsmotor 14 zugewandten Seite des Gehäuses 1 liegt. Die Befestigungsöffnungen 7 besitzen den gleichen Abstand zur Mitte der Aussparungen 6, sind jedoch voneinander unterschiedlich weit entfernt. Der Verbrennungsmotor 14 ist so auf der oberen Ebene 3 plaziert, daß seine Abtriebswelle 15 durch die Öffnung 6 auf die Unterseite des Gehäuses 1 ragt und die Bohrungen 16 in der Unterseite des Verbrennungsmotors 14 jeweils direkt oberhalb einer der Öffnungen 7 in der Ebene 3 angeordnet sind. Durch die Anordnung der Öffnungen 7 mit zueinander unterschiedlichen Abständen wird die Drehlage des Verbrennungsmotors 14 festgelegt, so daß nur eine Position des Verbrennungsmotors 14 möglich ist, während der Elektromotor 10 in vier um jeweils 90° um die vertikale Achse gedrehten Positionen befestigt werden kann. Der Verbrennungsmotor 14 wird mit drei Schrauben 17 am Gehäuse fixiert. Durch die Auflage des Motors 14 auf dem Bund 8 der Befestigungsöffnungen 7 ergibt sich eine definierte Auflagefläche. Um die Stabilität der Verbindung zu erhöhen und ein Ausreißen der Schraubenköpfe aus dem Gehäuse 1 bei starker Beanspruchung zu vermeiden, können zwischen den Köpfen der Schrauben 13 und 17 und dem Gehäuse 1 jeweils Unterlagscheiben 18 angebracht sein. Auch die Verwendung entsprechend gestalteter Schrauben kann zweckmäßig sein.

## Patentansprüche

1. Gehäuse (1) mit einem Gehäusetopf (9), geeignet für ein Motorarbeitsgerät, insbesondere für einen Motorrasenmäher, zur Festlegung eines Antriebsmotors (10, 14), der in dem Gehäusetopf (9) anzuordnen ist und mit einer Abtriebswelle (11, 15) den Boden des Gehäusetopfes (9) durchragt, wobei der Antriebsmotor (10, 14) auf einer Befestigungsfläche (2, 3) des Gehäusetopfes (9) festgelegt ist,
**dadurch gekennzeichnet, daß** der Gehäusetopf (9) eine erste Befestigungsfläche (2) zur Montage eines Elektromotors (10) und eine zweite Befestigungsfläche (3) zur Montage eines Verbrennungsmotors (14) aufweist, wobei die Befestigungsflächen (2, 3) in Richtung der Abtriebswelle (11, 15) mit Abstand (a) zueinander liegen und - in Richtung der Abtriebswelle (11, 15) gesehen - die eine Befestigungsfläche (2) innerhalb der Außenkontur der anderen Befestigungsfläche (3) liegt.

2. Gehäuse nach Anspruch 1,
**dadurch gekennzeichnet, daß** die erste Befestigungsfläche (2) des Gehäusetopfes (9) eine mittige, vorzugsweise kreisförmige Aussparung (6) aufweist.

3. Gehäuse nach Anspruch 1 oder 2,
**dadurch gekennzeichnet, daß** in einer Befestigungsfläche (2, 3) Befestigungsöffnungen (4, 7) vorgesehen sind, die um die Abtriebswelle (11, 15) angeordnet sind und insbesondere zur Abtriebswelle (11, 15) den gleichen Abstand haben.

4. Gehäuse nach Anspruch 3,
**dadurch gekennzeichnet, daß** die Lage des Motors (10, 14) auf der Befestigungsfläche (2, 3) durch die Lage der Befestigungsöffnungen (4, 7) bestimmt ist.

5. Gehäuse nach Anspruch 3 oder 4,
**dadurch gekennzeichnet, daß** die Befestigungsöffnungen (4, 7) einen vorstehenden Bund (5, 8) aufweisen, der auf der dem Motor (10, 14) zugewandten Seite des Gehäuses (1) liegt.

6. Gehäuse nach einem der Ansprüche 3 bis 5,
**dadurch gekennzeichnet, daß** die Befestigungsöffnungen (4) auf der ersten Befestigungsfläche (2) symmetrisch zur Mitte der Aussparung (6) liegen und vorteilhaft vier in Umfangsrichtung mit gleichen Abständen liegende Befestigungsöffnungen (4) angeordnet sind.

7. Gehäuse nach einem der Ansprüche 3 bis 6,
**dadurch gekennzeichnet, daß** auf der zweiten Befestigungsfläche (3) drei Befestigungsöffnungen (7) angeordnet sind, die die Drehlage des Verbrennungsmotors (14) festlegen.

## Claims

1. A housing (1) with a housing pan (9) which is suitable for a motorised tool, in particular for a motorised lawnmower, for fixing a drive engine/motor (10, 14) to be positioned in the housing pan (9) and which has a driven shaft (11, 15) which projects through the base of the housing pan (9), the drive engine/motor (10, 14) being fixed onto a fixing surface (2, 3) of the housing pan (9),
**characterised** i n that
the housing pan (9) has a first fixing surface (2) for mounting an electric motor (10) and a second fixing surface (3) for mounting an internal combustion engine (14), the fixing surfaces (2, 3) lying a distance (a) apart in the direction of the driven shaft (11, 15) and - when viewed in the direction of the driven shaft (11, 15) - one fixing surface (2) lying within the outer contour of the other fixing surface (3).

2. A housing in accordance with claim 1,
**characterised** i n that
the first fixing surface (2) of the housing pan (9) has a central, preferably circular opening (6).

3. A housing in accordance with claim 1 or 2,
**characterised in that**
provided in a fixing surface (2, 3) are fixing openings (4, 7) which are positioned around the driven shaft (11, 15) and are, in particular, the same distance from the driven shaft (11, 15).

4. A housing in accordance with claim 3,
**characterised in that** the position of the engine/motor (10, 14) on the fixing surface (2, 3) is determined by the position of the fixing openings (4, 7).

5. A housing in accordance with claim 3 or 4,
**characterised** i n that
the fixing openings (4, 7) have a protruding collar (5, 8) which lies on the side of the housing (1) facing the engine/motor (10, 14).

6. A housing in accordance with one of claims 3 to 5,
**characterised** i n that
the fixing openings (4) on the first fixing surface (2) lie symmetrically in relation to the centre of the opening (6), and advantageously four fixing openings (4) are positioned equidistantly in relation to its periphery.

7. A housing in accordance with one of claims 3 to 6,
**characterised in that**
positioned on the second fixing surface (3) are three fixing openings (7) which determine the rotating position of the internal combustion engine (14).

## Revendications

1. Carter (1) comprenant un pot de carter (9), approprié pour un outil de travail motorisé, en particulier pour une tondeuse à gazon motorisée, servant à fixer un moteur d'entraînement (10, 14) qui est à disposer dans le pot de carter (9) et, par un arbre de sortie (11, 15), traverse le fond du pot de carter (9), où le moteur d'entraînement (10, 14) est fixé sur une surface de fixation (2, 3) du pot de carter (9),
**caractérisé**
**en ce que** le pot de carter (9) présente une première surface de fixation (2) servant au montage d'un moteur électrique (10) et une seconde surface de fixation (3) servant au montage d'un moteur thermique (14), où les surfaces de fixation (2, 3), dans la direction de l'arbre de sortie (11, 15), sont espacées l'une de l'autre par une distance (a) et - en regardant dans la direction de l'arbre de sortie (11, 15) - l'une des surfaces de fixation (2) est située à l'intérieur du contour extérieur de l'autre surface de fixation (3).

2. Carter selon la revendication 1, **caractérisé en ce que** la première surface de fixation (2) du pot de carter (9) présente une cavité centrale (6), de préférence de forme circulaire.

3. Carter selon la revendication 1 ou 2, **caractérisé en ce qu'**il est prévu, dans une surface de fixation (2, 3), des ouvertures de fixation (4, 7) qui sont disposées autour de l'arbre de sortie (11, 15) et ont la même distance, en particulier par rapport à l'arbre de sortie (11, 15).

4. Carter selon la revendication 3, **caractérisé en ce que** la position du moteur (10, 14), sur la surface de fixation (2, 3), est déterminée par la position des ouvertures de fixation (4, 7).

5. Carter selon la revendication 3 ou 4, **caractérisé en ce que** les ouvertures de fixation (4, 7) présentent un bord en saillie (5, 8) qui est situé sur le côté du carter (1) tourné vers le moteur (10, 14).

6. Carter selon l'une quelconque des revendications 3 à 5, **caractérisé en ce que** les ouvertures de fixation (4), sur la première surface de fixation (2), sont situées de façon symétrique par rapport au centre de la cavité (6) et, de façon avantageuse, quatre ouvertures de fixation (4) sont disposées en ayant des intervalles identiques dans la direction circonférentielle.

7. Carter selon l'une quelconque des revendications 3 à 6, **caractérisé en ce que** trois ouvertures de fixation (7) sont disposées sur la seconde surface de fixation (3), lesquelles ouvertures de fixation déterminent la position de rotation du moteur thermique (14).
